# EUROPEAN PATENT APPLICATION

(11) **EP 1 809 064 A2**
(43) Date of publication of application: **18.07.2007**
(21) Application number: 07000792.7
(22) Date of filing: 16.01.2007
(51) Int. Cl.: H04Q 7/38

(54) **Apparatus and method for allocating resources in an FDMA wireless communication system**

(30) Priority: 16.01.2006 KR 20060004526
(71) Applicant: Samsung Electronics Co., Ltd., Suwon-si, Gyeonggi-Do (KR)
(72) Inventor: Kwon, Hwan-Joon, Yeongtong-gu Suwon-si Gyeonggi-do (KR); Kim, Dong-Hee, Yeongtong-gu Suwon-si Gyeonggi-do (KR); Han, Jin-Kyu, Yeongtong-gu Suwon-si Gyeonggi-do (KR); Kim, Yu-Chul, Yeongtong-gu Suwon-si Gyeonggi-do (KR)
(74) Representative: Grünecker, Kinkeldey, Stockmair & Schwanhäusser Anwaltssozietät

(57) **Abstract**

A method for resource allocation in an FDMA communication system is disclosed in which the resource allocation method includes distinguishing a dynamic resource allocation service, an amount of resource allocation for which changes every transmission time, and a static resource allocation service, an amount of resource allocation for which is fixed every transmission time; determining a start point of the static resource allocation service in a one-dimensionally arranged logical resource, and sequentially allocating resources for each static resource allocation service; and allocating resources left after the static resource allocation, to the dynamic resource allocation service in a reverse direction as that of the static resource allocation service, starting from a last resource located in the opposite side of static resources for the static resource allocation service in the one-dimensionally arranged logical resource.

## Description

### BACKGROUND OF THE INVENTION

### 1. Field of the Invention

The present invention relates generally to an apparatus and method for allocating resources in a wireless communication system, and, in particular, to an apparatus and method for allocating resources in a Frequency Division Multiple Access (FDMA) wireless communication system.

### 2. Description of the Related Art

A wireless communication system has been developed to provide communication regardless of user location. The wireless communication system provides communication to independent users using limited resources. Various schemes have been developed for using the limited resources. For example, a scheme of identifying users using specific orthogonal code resources is called Code Division Multiple Access (CDMA), a scheme of identifying users using time resources is called Time Division Multiple Access (TDMA), and a scheme of identifying users using frequency resources is called Frequency Division Multiple Access (FDMA).

Each of the schemes can be subdivided into various types, and more than two of the schemes can be combined. For example, an FDMA scheme that allocates orthogonal frequency resources to the users using a specific method for communication is called Orthogonal Frequency Division Multiple Access (OFDMA). In a broad sense, the OFDMA scheme is one of the FDMA schemes. For communication, the various systems allocate available system resources to users. A description will now be made of a method for allocating resources in, for example, an OFDMA system.

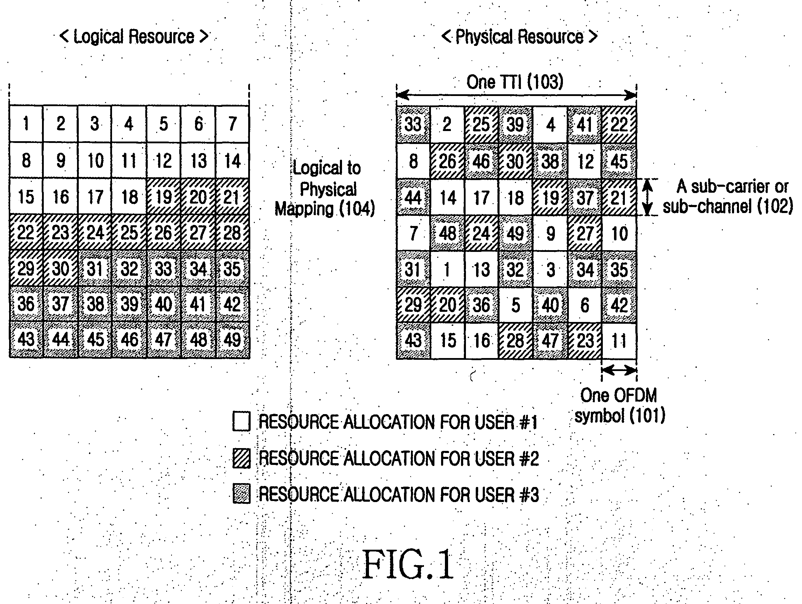

FIG. 1 illustrates a resource allocation method in an OFDMA system. The OFDMA system supports multiple access by allocating different subcarriers to users using a plurality of orthogonal subcarriers.

Referring to FIG. 1, the left side indicates logical resources and the right side represents actual physical resources. On the right side of FIG. 1, the abscissa represents time, and the ordinate represents frequency. In FIG. 1, reference numeral 101 denotes one OFDM symbol interval and reference numeral 102 denotes one subchannel comprised of one subcarrier or a bundle of several adjacent subcarriers. Reference numeral 103 denotes one Transmission Time Interval (TTI) comprised of several OFDM symbols. The TTI indicates a basic time unit in which one data block is transmitted. In FIG. 1, the logical resources indicate virtual resources for defining resource allocation for the physical resources. That is, the actually-used resources in the physical space can be defined by defining resource allocation in the logical resources and then defining a mapping relationship 104 between the logical resources and the physical resources.

If logical resources are allocated to each user, information on the allocated resources should be provided to the user. A signaling method is used as a method for providing the resource allocation information to users and a description is provided below of the signaling in which the logical resource allocation is achieved.

Referring to FIG. 1, in the logical resource drawing shown in the left side, one minimum tetragon will be referred to as a Time-Frequency (TF) unit, for convenience. It will be assumed herein that the logical resource has, for example, seven TF units in both the horizontal axis and the vertical axis, and thus has a total of forty-nine TF units. Generally, the phrase "allocating resources to terminals by a base station" refers to allocating the logical resource, i.e. the forty-nine TF units, to terminals.

The resources can generally be allocated by several methods such as a one-dimensional allocation method and a two-dimensional allocation method. For conciseness, only the one-dimensional resource allocation are described herein.

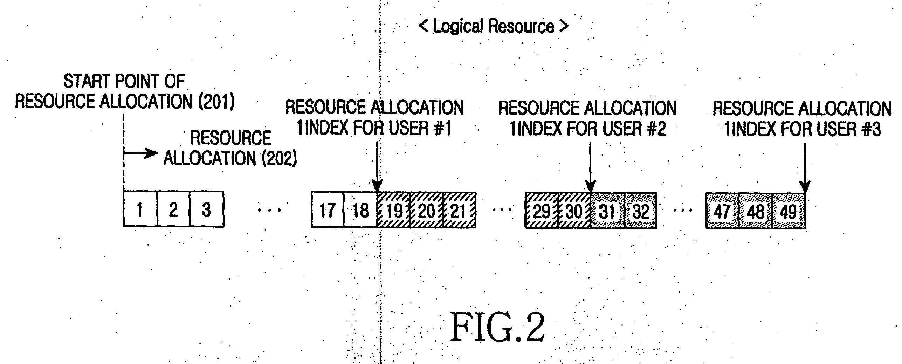

The one-dimensional resource allocation refers to a method of successively allocating a total of the forty-nine TF units to users. An exemplary one-dimensional resource allocation is shown in the left side of FIG. 1. That is, as shown in FIG. 1, TF units #1 to #18 are allocated to a user #1, TF units #19 to #30 are allocated to a user #2, and TF units #31 to #49 are allocated to a user #3. The reason for calling the foregoing resource allocation the one-dimensional resource allocation will now be described with reference to FIG. 2.

FIG. 2 is a conceptual diagram illustrating one-dimensional resource allocation in a communication system. With reference to FIG. 2, a detailed description is provided of one-dimensional resource allocation in a communication system.

As shown in FIG. 2, resources can be spread over a one-dimensional domain and resource allocation information can be expressed using only one resource allocation point. Because the providing of resource allocation information using only one resource allocation point in this way is possible, this resource allocation is called one-dimensional resource allocation. FIG. 2 provides an example of resources allocated to the user #1, the user #2, and the user #3 of FIG. 1. That is, the TF units #1 to #18 are allocated to the user #1, the TF units # 19 to #30 are allocated to the user #2, and the TF units #31 to #49 are allocated to the user #3.

Therefore, FIG. 2 provides an example of conventional one-dimensional resource allocation that can perform resource allocation by indicating only the end point of resource allocation. For a detailed description thereof, referring to FIG. 2, logical resources of FIG. 1, i.e. 49 TF units #1 to #49, are spread one-dimensionally. In FIG. 2, it is predetermined between a base station and a terminal that a start point 201 of resource allocation is the TF unit #1 and resource allocation is performed in a direction shown by reference numeral 202. Therefore, if the base station signals resource allocation information {18, 30, 49} to user #1, user #2 and user #3 in regular order, then user #1 recognizes that resources allocated thereto include the TF unit # 1, which is the resource allocation start point, through the TF unit #18 corresponding to the first element in the resource allocation set, and user #2 recognizes that resources allocated thereto include the TF unit #19, which is the next point of the TF unit #18 indicated by the first element in the resource allocation set, through the TF unit #30 corresponding to the second element in the resource allocation set. Finally, user #3 recognizes that resources allocated thereto include the TF unit #31, which is the next point of the TF unit #30 indicated by the second element in the resource allocation set, through the TF unit #49 corresponding to the third element in the resource allocation set. Herein, the set of the TF units, i.e. the set of allocable resources, will be referred to as a resource allocation set.

The resource allocation can be classified into a dynamic resource allocation method and a static resource allocation method. The dynamic resource allocation method newly allocates resources every TTI. In order to support the dynamic resource allocation, the base station generally transmits control information including resource allocation information every TTI. That is, the resource allocation information included in the control information represents the information indicating to whom how many resources are allocated during this TTI. Table 1 below shows, as an example, a structure of the control information. Specifically, Tale 1 shows an example control information structure for the one-dimensional resource allocation shown in FIG. 2. Using the information shown in Table 1, the base station provides terminals with the information indicating that there are three terminals having unique terminal IDentifiers (IDs) 1, 2 and 3, and a resource allocation set for the terminals is {18, 30, 49}. Then each terminal receives the information of Table 1, below, and obtains information on the resources allocated thereto in the method described above.

**Table 1**

| Control Information (field) | Field Value |
|---|---|
| Terminal ID | 1 |
| Resource Allocation Information | 18 |
| Terminal ID | 2 |
| Resource Allocation Information | 30 |
| Terminal ID | 3 |
| Resource Allocation Information | 49 |

In Table 1, field values of the terminal IDs mean a user #1, a user #2 and a user #3, respectively, and field values of the resource allocation information mean end points of the TF units for the users, shown in FIG. 2, respectively.

The static resource allocation method, as another resource allocation method, statically allocates a predetermined amount of static resources to a particular user for a certain time interval, i.e. for a predetermined number of TTIs, instead of newly allocating resources every TTI. In principle, therefore, the static resource allocation method has no need to transmit resource allocation information every TTI.

Commonly, the static resource allocation method and the dynamic resource allocation method are used together, because the static resource allocation scheme is suitable for the service in which packets are generated regularly, and the dynamic resource allocation scheme is suitable for the service in which packets are not regularly generated. The OFDMA systems generally employ the one-dimensional resource allocation scheme. For example, the OFDMA-based IEEE 802.16e system is the typical OFDMA system employing the one-dimensional resource allocation scheme. Therefore, the IEEE 802.16e system uses the one-dimensional resource allocation scheme and reduces signaling overhead by providing only the end point information in the resource allocation of Table 1.

However, the foregoing method allocates resources without distinction of a terminal for which the static resource allocation is suitable, and a terminal for which the dynamic resource allocation is suitable. This method should transmit control information every TTI even to the terminal for which the static resource allocation is unsuitable, as it performs signaling without determining a suitable scheme for the terminals. This is because if a transmitter does not provide appropriate information through signaling every transmission time, a receiver cannot correctly detect it. The signaling transmitted to the terminal for which the static resource allocation is suitable may cause considerable and unwanted signaling overhead for all channels. In addition, the increase in the system overhead may cause undesirable waste of bandwidth.

### SUMMARY OF THE INVENTION

An object of the present invention is to address at least the above described problems and/or disadvantages and to provide at least the advantages described below. Accordingly, the present invention provides an apparatus and method for reducing overhead during resource allocation based on a one-dimensional resource allocation scheme in an FDMA wireless communication system.

The present invention further provides an apparatus and method for preventing waste of bandwidth during resource allocation based on a one-dimensional resource allocation scheme in an FDMA wireless communication system.
According to one object of the present invention, a method for resource allocation in a Frequency Division Multiple Access (FDMA) communication system is provided that includes distinguishing a dynamic resource allocation service, an amount of resource allocation for which changes every transmission time, and a static resource allocation service, an amount of resource allocation for which is fixed every transmission time; determining a start point of the static resource allocation service in one-dimensionally arranged logical resource, and sequentially allocating resources for each static resource allocation service; and allocating resources remaining after the static resource allocation, to the dynamic resource allocation service in a reverse direction as that of the static resource allocation service, starting from a last resource located in the opposite side of static resources for the static resource allocation service in the one-dimensionally arranged logical resource.

According to another object of the present invention, an apparatus for resource allocation in a Frequency Division Multiple Access (FDMA) communication system is provided that includes a user data buffer for providing an amount of transmission data for each service; a channel quality information receiver for receiving channel status information between each terminal and a base station; and a scheduler for distinguishing a dynamic resource allocation service, an amount of resource allocation for which changes every transmission time, and a static resource allocation service, an amount of resource allocation for which is fixed every transmission time depending on the information received from the user data buffer and the channel quality information receiver; determining a start point of the static resource allocation service in one-dimensionally arranged logical resource, and sequentially allocating resources for each static resource allocation service; and allocating resources remaining after the static resource allocation, to the dynamic resource allocation service in a reverse direction as that of the static resource allocation service, starting from a last resource located in the opposite side of static resources for the static resource allocation service in the one-dimensionally arranged logical resource.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a resource allocation method in an OFDMA system;
FIG. 2 is a conceptual diagram illustrating one-dimensional resource allocation in a communication system;
FIG. 3 is a flowchart illustrating resource allocation for each terminal by a base station and a signaling procedure for the resource allocation according to the present invention;
FIG. 4 illustrates resource start points of dynamic resource allocation and static resource allocation in logical resource according to the present invention;
FIG. 5 illustrates logical resource allocation in one-dimensional resource according to the present invention; and
FIG. 6 is a block diagram illustrating a structure of a base station transmitter according to the present invention.

### DETAILED DESCRIPTION OF THE PREFERRED EMBODIMENTS

Preferred embodiments of the present invention will now be described in detail with reference to the annexed drawings, which utilize the same drawing reference numerals to refer to similar elements, features and structures. In the following description, a detailed description of known functions and configurations incorporated herein has been omitted for clarity and conciseness.

The present invention provides a one-dimensional resource allocation method. The one-dimensional resource allocation method according to the present invention (i) previously distinguishes a terminal suitable to use a dynamic resource allocation scheme and a terminal suitable to use a static resource allocation scheme, (ii) opposes a resource allocation start point of the dynamic resource allocation to a resource allocation start point of the static resource allocation, (iii) includes the dynamic resource allocation information in control information every TTI, and (iv) transmits the static resource allocation information only when there is a change in the static resource allocation information.

Here, the static resources are allocated to all terminals, which request the static resources. The allocated resources are the whole static resources. It can occur that a terminal from among terminals to which some of the whole static resources are allocated ends its service. When allocated resources to a terminal, which ends its service, occupy intermediate, the method of the present invention newly performs resource allocation for the terminals to which the static resources are allocated, thereby preventing any intermediate resources from being unallocated.

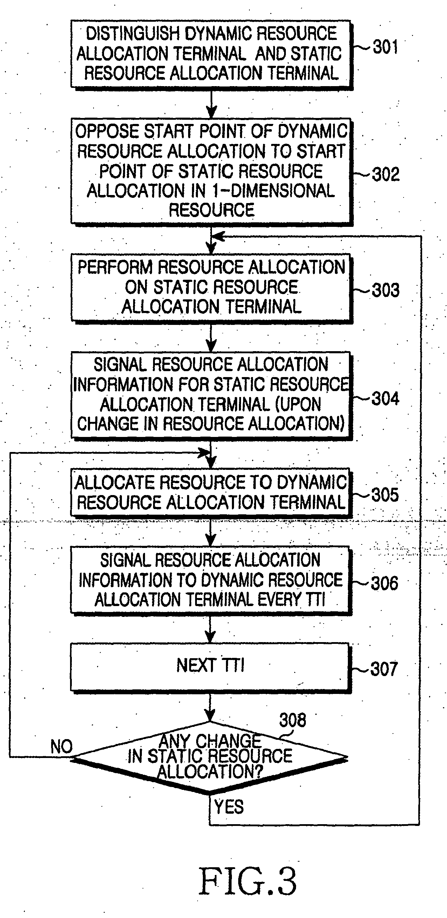

FIG. 3 is a flowchart illustrating resource allocation for each terminal by a base station and a signaling procedure for the resource allocation according to the present invention. Referring to FIG. 3, in step 301 a base station classifies all terminals desiring to perform communication into terminals for which dynamic resource allocation is needed and terminals for which static resource allocation is needed. The base station can perform the terminal classification using information on the terminals to which it should constantly transmit only a predetermined amount of information for a predetermined time interval, and also using information on a Quality-of-Service (QoS) parameter of the service provided to the terminals. It will be assumed herein that one terminal receives only one service. However, if one terminal receives a plurality of services, the base station should classify the terminals in the foregoing manner for each service.

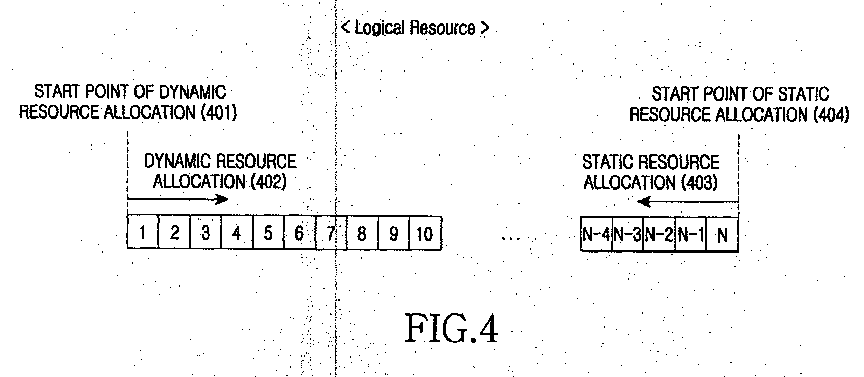

After classifying the terminals in step 301, the base station opposes in step 302 a start point of resources to be dynamically allocated among all one-dimensional resources to a start point of resources to be statically allocated. With reference to FIG. 4, a description is provided of resource start points for dynamic resource allocation and static resource allocation in the one-dimensional resource.

FIG. 4 is a diagram illustrating resource start points of dynamic resource allocation and static resource allocation in logical resource according to the present invention. Referring to FIG. 4, reference numeral 401 denotes a start point of the dynamic resource allocation and reference numeral 404 denotes a start point of the static resource allocation. That is, in FIG. 4 a start point of the initial resource in the logical resource is determined as a start point of the dynamic resource allocation and a start point of the static resource allocation is inversely allocated from the last resource in the logical resource. Therefore, reference numeral 402 indicates a direction in which the dynamic resources are allocated and reference numeral 403 indicates a direction in which the static resources are allocated. Although it is assumed in FIG. 4 that the start point of the dynamic resource allocation is allocated from the first resource in the logical resource, it can also be allocated conversely. That is, the base station can be designed to allocate the static resources from the first resource in the logical resource and to allocate the dynamic resources from the last resource. In the present invention, the terminal for which the dynamic resources should be allocated in the logical resource should preferably be opposed to the terminal for which the static resources should be allocated, in terms of the resource allocation start point and the resource allocation direction.

After allocating the resources in the manner described with reference to FIG. 4, the base station performs, in step 303, resource allocation on a terminal for which it should allocate static resources. That is, as shown in FIG. 4, the base station performs resource allocation from the start point 404 in the direction 403. After the resource allocation, the base station proceeds to step 304 where it delivers information on the resources allocated in step 303 to the terminal through signaling. It should be noted that the information on the static resource allocation is not included in the control information that is transmitted every TTI. That is, the information on the static resource allocation is signaled to the terminal only when there is a change in the static resource allocation.

If the signaling is completed for the static resource allocation terminals (i.e. terminals that should undergo static resource allocation), the base station performs resource allocation on dynamic resource allocation terminals (i.e. terminals that should undergo dynamic resource allocation) in step 305. As described in FIG. 4, the base station performs resource allocation from the start point 401 in the direction 402. That is, the dynamic resource allocation is achieved at the opposite point in the logical resource, compared with the static resource allocation. If the resource allocation is achieved for the current TTI in this manner, the base station proceeds to step 306 where it signals resource allocation information for the dynamic resource allocation terminal. The signaling for the dynamic resource allocation is included in the control information that is transmitted every TTI, for the following reason. That is, when the static resource allocation is performed, the same resources are allocated even in the next TTI, but the terminals that are dynamically allocated resources need different resources every TTI. Therefore, the base station delivers resource allocation information to the dynamic resource allocation terminal through signaling every TTI.

After completing the signaling every TTI, the base station proceeds to step 307 where it detects a terminal that needs resource allocation at the next TTI, for scheduling in the next TTI. Thereafter, the base station determines in step 308 whether there is a change in the static resource allocation. The phrase "a change in the static resource allocation" refers to (i) a need for allocation of new static resources and (ii) withdrawal (or de-allocation) of the resources allocated in the previous TTI. That is, determining whether there is a need for allocation of new static resources corresponds to determining whether there is any new service or new terminal that needs allocation of static resources. Alternatively, determining whether there is a need for allocation of new static resources corresponds to determining whether there is a need for a change in QoS even though there is no new service, so there will be a constant need for a greater amount of resources than the amount of the currently provided static resources. To the contrary, the resources allocated in the previous TTI are withdrawn (or de-allocated), when the terminal currently allocated the static resources closes the service, needs lower QoS due to a change in the type of the provided service, or needs lower QoS than that of the current service.

If it is determined in step 308 that there is a need for a change in the static resource allocation, the base station returns to step 303 where it starts resource allocation of the next TTI beginning from the static resource terminal. However, if there is no need for a change in the static resource allocation, the base station returns to step 305 where it can provide resource allocation and signaling only to the dynamic resource allocation terminal. In this way, the base station can reduce the amount of signaling, and can efficiency use the wireless resources.

In addition, the method described for the static resource allocation in steps 308 and 303 can newly allocate resources for the following four cases, thereby preventing intermediate resources from being unallocated. A description is provided of these four described cases.

First, a terminal that has already been allocated static resources, and has been receiving a service, closes the service. Second, for some reason, the base station desires to change resource allocation to the static resource allocation terminal. Third, the changed resources have occupied intermediate resources among the resources allocated with the static resources. Fourth, the static resources are allocated.

The foregoing cases are described with reference to FIG. 2, assuming in FIG. 2 that TF units #47, #48 and #49 are used for the static resource allocation, and are allocated to terminals a, b and c, respectively. In this case, the dynamic resource allocation is possible only for TF units #1 to #46. When the terminal b closes its service at a certain time, i.e. when there is no more need for resource allocation to the terminal b, TF unit #48 is withdrawn. Then, TF units #47 and #49 are used for the static resource allocation. In this case, the dynamic resource allocation can still use only TF units #1 to #46. Therefore, in order to make the maximum use of the dynamic resources possible, the base station changes the resource allocation so that it uses TF unit #48 rather than TF unit #47, for the terminal a. As a result, the dynamic resource allocation can use TF units #1 to #47.

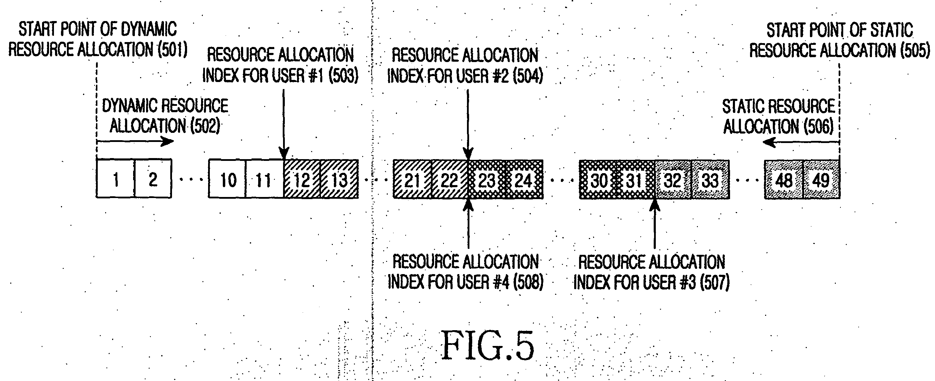

FIG. 5 is a diagram illustrating logical resource allocation in one-dimensional resource according to the present invention. Referring to FIG. 5, as described above, the entire resources include TF units #1 to #49. It will be assumed that there are a user 1, a user 2, a user 3 and a user 4, and that user 1 and user 2 are dynamic resource allocation users, while user 3 and user 4 are static resource allocation users. Then, as described above, the base station performs resource allocation from a TF unit #49 (at numeral 505 in FIG. 5) in a direction 506, for the static resource allocation users, and performs resource allocation from a TF unit #1 (at numeral 501 in FIG. 5) in a direction 502, for the dynamic resource allocation users. The base station provides information indicating an index '32' to the static resource allocation user 3 through signaling. That is, through the signaling, the base station provides the information indicating that user 3 is allocated resources of TF units #49 to #32. In addition, the base station provides information indicating an index '23' to the static resource allocation user 4 through signaling. Then, through the signaling, user 4 can recognize that resources of TF units #31 to 23 are allocated thereto.

The TF units #1 to #22, which are the resources remaining after the static resource allocation, are used for the dynamic resource allocation. The base station provides information indicating an index '11' to the static resource allocation user 1 through signaling. That is, the base station provides user 1 with the information indicating that resources of TF units #1 to #11 are allocated to user 1. In addition, the base station provides information indicating an index '22' to the static resource allocation user 2 through signaling. In this way, through the signaling, the base station provides to user 2 with the information indicating that the resources of TF units # 12 to #22 are allocated to user 2.

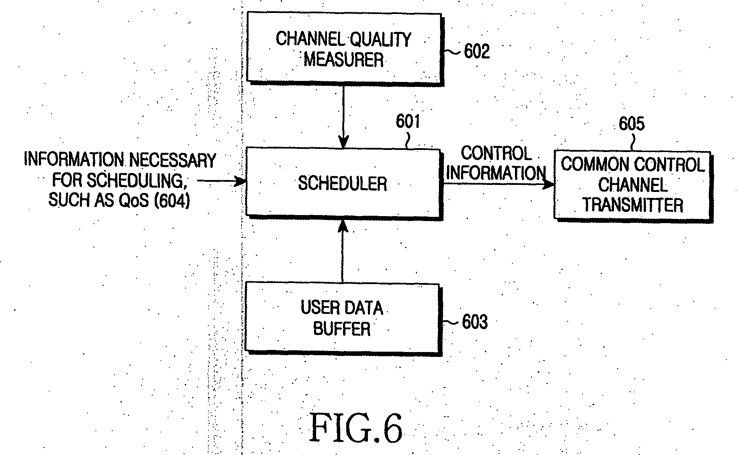

FIG. 6 is a block diagram illustrating a structure of a base station transmitter according to the present invention. With reference to FIG. 6, a detailed description will now be made of a structure and operation of a base station transmitter according to the present invention. In FIG. 6, a scheduler 601 performs resource allocation, i.e. dynamic resource allocation and static resource allocation. Therefore, the scheduler 601 should receive a variety of information necessary for scheduling for the resource allocation. In FIG. 6, a channel quality measurer 602 measures channel quality of a reverse channel received from a terminal. By measuring the reverse channel quality in this way, the base station can detect channel quality between the base station and the terminal. In an alternative method where the terminal transmits channel quality information to the base station, the channel quality measurer 602 can be replaced with a channel quality information receiver. In this case, the channel quality information receiver receives channel quality information for a forward channel measured by the terminal, and provides the received channel quality information to the scheduler 601. A user data buffer 603 provides the scheduler 601 with the information indicating the amount of stored data that is received and to be transmitted, for each user or each service.
In addition, the scheduler 601 receives the information necessary for scheduling, such as QoS parameter, for each service to be provided to each user. Such information can be received from a controller (now shown) included in the base station or can be used based on the information received from an upper layer such as a base station controller. Because the required information provided to the scheduler 601 can be different according to the system, only generally required components matters are discussed herein.

The scheduler 601 performs scheduling according to a rule described in the present invention, using the variety of received information, and then outputs the scheduling information to a common control channel transmitter 605. The common control channel transmitter 605 is a part for transmitting control information. Therefore, the common control channel transmitter 605 receives the control information, converts the received control information into a format that can be transmitted through a common control channel, and then transmits the converted data through a wireless channel. Here, the procedure in which the common control channel transmitter 605 transmits the control information through the common control channel is performed under the control of the scheduler 601, or under the control of a controller of the base station not shown in FIG. 6.

As can be understood from the foregoing description, the use of the resource allocation apparatus and method described by the present invention facilitates efficient utilization of the limited wireless resources in the FDMA packet data mobile communication system, thereby securing higher capacity.

While the invention has been shown and described with reference to a certain preferred embodiment thereof, it will be understood by those skilled in the art that various changes in form and details may be made therein without departing from the spirit and scope of the invention, as defined by the appended claims.

## Claims

1. A method for resource allocation in a Frequency Division Multiple Access (FDMA) communication system, the method comprising:
distinguishing a dynamic resource allocation service and a static resource allocation service;
determining a start point of the static resource allocation service in a one-dimensionally arranged logical resource, and sequentially allocating resources for each static resource allocation service; and
allocating resources remaining after the static resource allocation to the dynamic resource allocation service in a reverse direction of the static resource allocation service, starting from a last resource located in an opposite side of static resources for the static resource allocation service in the one-dimensionally arranged logical resource.

2. The method of claim 1, wherein the dynamic allocation service requires an amount of resource allocation for which changes every transmission time, and the static resource allocation service requires an amount of resource allocation for which is fixed every transmission time during a certain time interval.

3. The method of claim 1, further comprising providing a terminal a service on the allocated resources and;
signaling an information regarding the allocated resources through a control channel.

4. The method of claim 3, wherein the information regarding the allocated resource comprising an index.

5. The method of claim 3, wherein the signaling an information for allocation of the static resource comprises:
performing static resource allocation when there is a need for a change in the resource allocation information.

6. The method of claim 5, wherein a need for a change in the resource allocation information exists when service is closed.

7. The method of claim 5, wherein the need for a change in the resource allocation information exists when there is a need for a change in static resource allocation as another service allocated static resources is closed.

8. The method of claim 5, wherein the need for a change in the resource allocation information exists when there is a need for a change in required Quality-of-Service (QoS) of the provided service.

9. The method of claim 5, wherein the need for a change in the resource allocation information exists when there is a need for a new service.

10. The method of claim 3, wherein the signaling an information for allocation of dynamic resource comprises:
providing allocation information of dynamic resource every time service data is provided.

11. An apparatus for resource allocation in a Frequency Division Multiple Access (FDMA) communication system, the apparatus comprising:
a scheduler for distinguishing a dynamic resource allocation service and a static resource allocation service, determining a start point of the static resource allocation service in a one-dimensionally arranged logical resource, and sequentially allocating resources for each static resource allocation service; and allocating resources remaining after the static resource allocation to the dynamic resource allocation service in a reverse direction of the static resource allocation service, starting from a last resource located in an opposite side of static resources for the static resource allocation service in the one-dimensionally arranged logical resource; and
a transmitter for generating a signal message using received allocation information of the resources from the scheduler for providing the resource allocation information to each of the plurality of terminals, and transmitting the signaling message.

12. The apparatus of claim 11, wherein the dynamic allocation service requires an amount of resource allocation for which changes every transmission time, and the static resource allocation service requires an amount of resource allocation for which is fixed every transmission time during a certain time interval.

13. The apparatus of claim 11, wherein the information regarding the allocated resource comprising an index.

14. The apparatus of claim 11, further comprising:
a user data buffer for providing an amount of transmission data for each service;
a channel quality information receiver for receiving channel status information between a plurality of terminals and a base station: and
wherein the scheduler allocates a resource depending on information received from the user data buffer and the channel quality information receiver

15. The apparatus of claim 11, wherein the scheduler performs static resource allocation when there is a need for a change in the resource allocation information.

16. The apparatus of claim 15, wherein the need for a change in the resource allocation information exists when the service is closed.

17. The apparatus of claim 15, wherein the need for a change in the resource allocation information exists when there is a need for a change in static resource allocation as another service allocated static resources is closed.

18. The apparatus of claim 15, wherein the need for a change in the resource allocation information exists when there is a need for a change in required Quality-of-Service (QoS) of the provided service.

19. The apparatus of claim 15, wherein the need for a change in the resource allocation information exists when there is a need for a new service.

20. The apparatus of claim 11, wherein the scheduler provides allocation information of dynamic resource every time service data is provided.
